# EUROPÄISCHE PATENTSCHRIFT

(11) **EP 3 818 210 B1**
(45) Veröffentlichungstag und Bekanntmachung des Hinweises auf die Patenterteilung: **08.10.2025**
(21) Anmeldenummer: 19731608.6
(22) Anmeldetag: 04.06.2019
(51) Int. Cl.: E01B 27/17, B61C 3/02, B61D 43/00, B60L 1/00

(54) **SCHIENENFAHRZEUG**
RAIL VEHICLE
VÉHICULE FERROVIAIRE

(30) Priorität: 04.07.2018 AT 1952018
(43) Veröffentlichungstag der Anmeldung: 12.05.2021
(73) Patentinhaber: Plasser & Theurer Export von Bahnbaumaschinen GmbH, 1010 Wien (AT)
(72) Erfinder: KRENN, Stefan, 4163 Klaffer am Hochficht (AT); LOIZENBAUER, Manuel, 4111 Walding (AT)
(86) Internationale Anmeldenummer: PCT/EP2019/064413
(87) Internationale Veröffentlichungsnummer: WO 2020/007548

(56) Entgegenhaltungen:
- WO-A1-2019/068400
- CN-U- 207 295 353
- US-A1- 2006 005 738
- US-A1- 2011 083 578

## Beschreibung

### Gebiet der Technik

Die Erfindung betrifft einen Fahrzeugverband umfassend ein Traktionsfahrzeug mit Schienenfahrwerken und ein daran gekuppeltes Schienenfahrzeug mit einem über Schienenfahrwerke auf einem Gleis verfahrbaren Maschinenrahmen und mit einem Arbeitsaggregat zur Bearbeitung des Gleises, wobei weiters ein Energiewandler, der zur Umwandlung von mechanischer Energie in elektrischer Energie mit einem der Schienenfahrwerke gekoppelt ist, und eine Stromwandlerschaltung zur Wandlung der elektrischen Energie, welche an einen Lastanschluss abgebbar ist, angeordnet sind. Außerdem betrifft die Erfindung ein Verfahren zum Betreiben eines Schienenfahrzeugs.

### Stand der Technik

Beispielsweise ist aus der EP 3 246 193 A1 eine Energieversorgungsanordnung zur Versorgung eines Energieverbrauchers mit elektrischer Energie, insbesondere für die Verwendung in einem Containertragwagen, bekannt. Ein an einer Radachse angeordneter Hydraulik-Generator sorgt für eine Umwandlung von kinetischer Energie des bewegten Containertragwagens in elektrische Energie. Die Energieversorgungsanordnung umfasst weiter einen Energieanschluss zum Anschließen einer Energiequelle. Ein Energiewandler wandelt die am Energieanschluss empfangene Energie in eine zum Laden einer Batterie geeignete Form um. Die in der Batterie gespeicherte Energie wird dann zur Speisung eines oder mehrerer daran angeschlossener Energieverbraucher zur Verfügung gestellt.

Als Fahrzeugverbände ausgebildete Arbeitszüge besitzen meist für die Energieversorgung eine zentrale Energieversorgungseinheit. Diese ist oft als zentrales Dieselaggregat ausgebildet. Um eine Energieversorgung von Arbeitsaggregaten von in Fahrzeugverbänden miteingebundenen Schienenfahrzeugen zu gewährleisten, müssen nach dem Stand der Technik für eine breite Einsatzmöglichkeit viele Schnittstellen zur Energieübertragung bereitgestellt werden. Diese Schnittstellen stellen einen hohen Kostenfaktor und Arbeitsaufwand dar und werden unter Umständen bei gewissen Fahrzeugtypen gar nicht genutzt. Ein Fahrzeugverband mit als Hybridfahrzeugen ausgebildeten Schienenfahrzeugen ist beispielsweise aus der US 2006/005738 A1 bekannt. Die US 2011/083578 A1 offenbart einen Fahrzeugverband für die Schienenbearbeitung mit Traktionsfahrzeugen und Arbeitsfahrzeugen. In den Fahrzeugen sind elektrische Energiespeicher zur Versorgung von Traktionsantrieben in den Traktionsfahrzeugen und von Arbeitsaggregaten in den Arbeitsfahrzeugen angeordnet. Zudem sind Bussysteme zum Austausch von elektrischer Energie zwischen den Fahrzeugen vorgesehen.

### Zusammenfassung der Erfindung

Der Erfindung liegen die Aufgaben zugrunde, für einen Fahrzeugverband und ein Verfahren der eingangs genannten Art Verbesserungen gegenüber dem Stand der Technik anzugeben.

Erfindungsgemäß werden diese Aufgaben gelöst durch die Merkmale der Ansprüche 1 und 6. Abhängige Ansprüche geben vorteilhafte Ausgestaltungen der Erfindung an.

Die Erfindung sieht vor, dass der Energiewandler, die Stromwandlerschaltung und der Lastanschluss am Schienenfahrzeug angeordnet sind, dass an dem Lastanschluss ein Elektromotor angeschlossen ist, dass der Elektromotor zum Betreiben eines Verteilergetriebes ausgebildet ist und dass das Verteilergetriebe zumindest mit dem einen Arbeitsaggregat zur Bearbeitung des Gleises gekoppelt ist. Das Arbeitsaggregat wird dadurch völlig energieautark betrieben. Eine zusätzliche am Schienenfahrzeug oder in einem Fahrzeugverbund angeordnete Energieversorgungseinheit ist daher nicht notwendig. Ein mit einer solchen Energieversorgungsanordnung ausgestattetes Schienenfahrzeug kann einfach und unkompliziert in einen beliebigen Fahrzeugverband zur Gleisbearbeitung miteingegliedert werden.

Erfindungsgemäß umfasst die Stromwandlerschaltung einen ersten Stromwandler, der über einen Gleichstrom-Zwischenkreis mit einem zweiten Stromwandler gekoppelt ist. Die vom Energiewandler umgewandelte elektrische Energie wird vom ersten Stromwandler von Wechselstrom bzw. Drehstrom in Gleichstrom umgewandelt, der zweite Energiewandler wandelt die elektrische Energie von Gleichstrom in Wechselstrom bzw. Drehstrom um.

Zudem ist erfindungsgemäß im Gleichstrom-Zwischenkreis ein Energiespeicher zum Speichern von elektrischer Energie vorgesehen. Durch den Energiespeicher wird die elektrische Energie zwischengespeichert und das Arbeitsaggregat nach Bedarf bei einem Stillstand des Schienenfahrzeugs zuverlässig mit Energie versorgt.

Des Weiteren sind erfindungsgemäß die Stromwandler als bidirektionale Wandler ausgebildet und der Energiewandler ist sowohl motorisch als auch generatorisch betreibbar. Dadurch ist es möglich, den Energiewandler für die Energieversorgung des Arbeitsaggregats oder als Fahrantrieb für das Schienenfahrzeug zu nutzen.

Bei einer weiteren günstigen Ausgestaltung der Erfindung sind mehrere Energieverbraucher an den Gleichstrom-Zwischenkreis angeschlossen. Dadurch werden im Betrieb mehrere Energieverbraucher wie Licht, Steuerung etc. zuverlässig mit Energie versorgt.

In einer vorteilhaften Ausprägung der Erfindung sind das Arbeitsaggregat und die Stromwandlerschaltung mittels einer gemeinsamen Steuerung angesteuert. Dadurch erfolgt ein effizientes Energiemanagement der Energieversorgungsanordnung. Die Steuerung stellt dem Arbeitsaggregat die benötigte Energie über die Stromwandlerschaltung zur Verfügung.

In einer weiteren Variante ist dem Verteilergetriebe eine Hydraulikpumpe für eine hydraulische Druckversorgung zugeordnet ist. Dadurch werden hydraulische Komponenten des Arbeitsaggregats mit Energie versorgt oder zusätzliche hydraulische Werkzeuge betrieben.

Zudem ist es günstig, wenn das Arbeitsaggregat als Schleifaggregat zum Schleifen des befahrenen Gleises ausgebildet ist. Besonders für ein als Schleifaggregat ausgebildetes Arbeitsaggregat ist eine unabhängige Energieversorgung im Arbeitseinsatz von Vorteil.

Beim erfindungsgemäßen Verfahren ist vorgesehen, dass mittels der bereitgestellten elektrischen Energie ein Elektromotor versorgt wird und dass der Elektromotor ein Verteilergetriebe antreibt, mit dem zumindest ein Arbeitsaggregat zur Bearbeitung des Gleises gekoppelt ist. Dadurch kann das Schienenfahrzeug einfach in einen Fahrzeugverband miteingegliedert werden, ohne Schnittstellen für eine Energieversorgung vorsehen zu müssen. Zudem wird der Energiewandler wahlweise als Fahrantrieb genutzt.

Eine weiterführende Variante des Verfahrens sieht vor, dass eine Hydraulikpumpe über das Verteilergetriebe angetrieben wird, um hydraulische Komponenten des Arbeitsaggregats zu versorgen. Durch eine Erweiterung der Energieversorgung mit der Hydraulikpumpe werden noch mehr Einsatzmöglichkeiten des Schienenfahrzeugs geschaffen. Insbesondere können Positionsänderungen und Justierungen des Arbeitsaggregats auf einfache Weise mittels Hydraulikzylinder vorgenommen werden.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Seitenansicht eines Fahrzeugverbands mit Traktionsfahrzeug und Schienenfahrzeug
- Fig. 2: Energieversorgungsanordnung eines Schienenfahrzeugs

### Beschreibung der Ausführungsformen

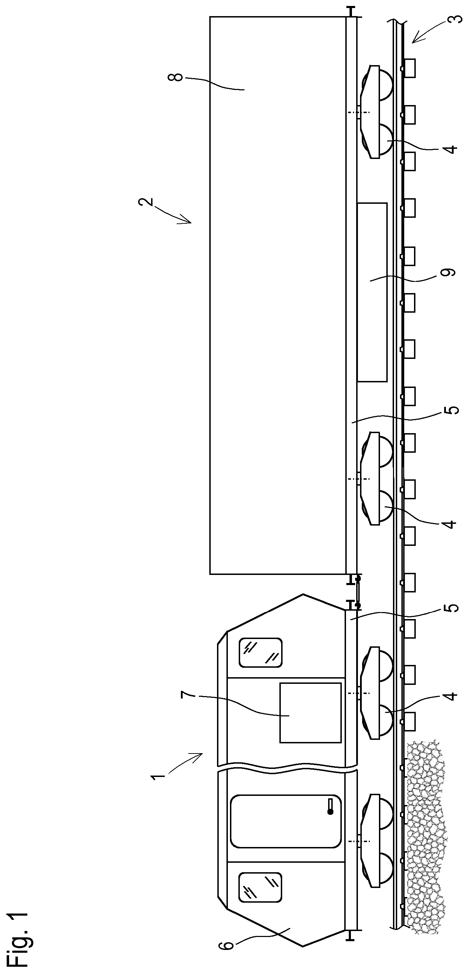

In Fig. 1 sind ein Traktionsfahrzeug 1 und ein daran gekuppeltes Schienenfahrzeug 2 dargestellt. Das Traktionsfahrzeug 1 weist einen auf einem Gleis 3 verfahrbaren und auf Schienenfahrwerken 4 abgestützten Maschinenrahmen 5 auf. Auf dem Maschinenrahmen 5 ist eine Fahrkabine 6 angeordnet. Das Traktionsfahrzeug 1 verfügt über einen Fahrantrieb 7, welcher zur Kraftübertragung mit den Schienenfahrwerken 4 gekoppelt ist.

Das an das Traktionsfahrzeug 1 gekuppelte Schienenfahrzeug 2 weißt ebenfalls einen über Schienenfahrwerke 4 verfahrbaren Maschinenrahmen 5 auf. Auf dem Maschinenrahmen 5 ist ein Fahrzeugaufbau 8 positioniert. Zwischen den Schienenfahrwerken 4 ist ein Arbeitsaggregat 9 angeordnet.

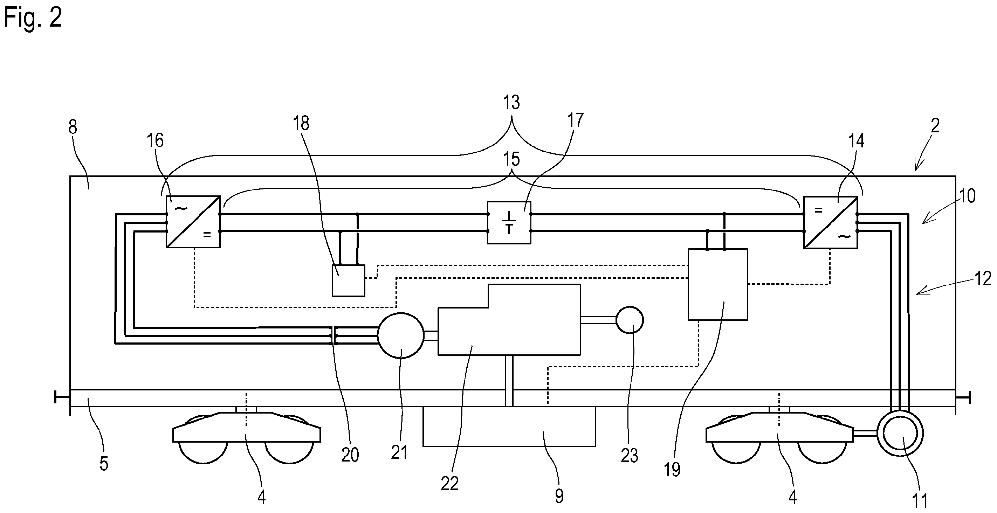

Fig. 2 zeigt eine Energieversorgungsanordnung 10 des Schienenfahrzeugs 2. Eines der Schienenfahrwerke 4 ist mit einem als Generator ausgebildeten Energiewandler 11 gekoppelt. Der Generator ist über elektrische Leiter 12 mit einer Stromwandlerschaltung 13 verbunden. Die Stromwandlerschaltung 13 umfasst einen ersten Stromwandler 14, welcher über einen Gleichstrom-Zwischenkreis 15 mit einem zweiten Stromwandler 16 verbunden ist. Außerdem sind im Gleichstrom-Zwischenkreis 15 ein Energiespeicher 17 angeordnet, um bei Bedarf die vom Energiewandler 11 bereitgestellte Energie zwischenzuspeichern.

An den Zwischenkreis 15 sind weitere Energieverbraucher 18 anschließbar, insbesondere mit einem eigenen vorgeschalteten Stromwandler. Eine Steuerung 19 ist zur gemeinsamen Ansteuerung der Komponenten des Stromwandlerschaltung 13 und gegebenenfalls der weiteren Energieverbraucher 19 angeordnet. Auch das Arbeitsaggregat 9 wird vorteilhafterweise mittels der gemeinsamen Steuerung 19 angesteuert, um das Energiemanagement zu optimieren. Beispielsweise wird das Arbeitsaggregat 9 erst dann aktiviert, wenn im Energiespeicher 17 ausreichend Energie für einen dauerhaften Betrieb des Arbeitsaggregats 9 über eine vorgegebene Zeitspanne hinweg vorhanden ist.

Am Ausgang der Stromwandlerschaltung 13 ist ein Lastanschluss 20 angeordnet, an den ein Elektromotor 21 angeschlossen ist. Der Elektromotor 21 ist mit einem Verteilergetriebe 22 gekoppelt welches mit dem Arbeitsaggregat 9 zur Bearbeitung des Gleises 3 verbunden ist. Außerdem ist dem Verteilergetriebe 22 eine Hydraulikpumpe 23 für die Versorgung eines Hydrauliksystems zugeordnet.

Im Folgenden wird das Verfahren für das an das Traktionsfahrzeug 1 gekuppelte Schienenfahrzeug 2 näher beschrieben. Während einer Fahrt des Fahrzeugverbandes wird die dafür benötigte Energie vom Fahrantrieb 7 des Traktionsfahrzeugs 1 über das angetriebene Schienenfahrwerk 4 auf das Gleis 3 übertragen. Das angekuppelte Schienenfahrzeug 2 wird dadurch mit kinetischer Energie beaufschlagt, wovon ein Teil zur Versorgung des Arbeitsaggregats 9 genutzt wird.

Dazu treibt zumindest eine Radachse des Schienenfahrwerks 4 des Schienenfahrzeug 2 den als Generator oder Motor-Generator-Einheit ausgebildeten Energiewandler 11 an. Der Energiewandler 11 wandelt die rotatorisch-mechanische Energie in elektrische Energie um. Günstigerweise ist der Energiewandler 11 als Wechselstrom- bzw. Drehstromgenerator ausgebildet.

Die so gewonnene elektrische Energie wird mittels des ersten Stromwandlers 14 von Wechselstrom bzw. Drehstrom in Gleichstrom umwandelt. Dadurch wird der sich im Gleichstrom-Zwischenkreis 15 befindliche Energiespeicher 17 aufgeladen und die gewonnene elektrische Energie zwischengespeichert. An die Zwischenkreisspannung sind zudem die Steuerung 19 als auch die weiteren Energieverbraucher 18 zur Versorgung mit Energie angeschlossen. Bei den Energieverbrauchern 18 handelt es sich beispielsweise um Leuchtmittel, um zusätzliche Steuerungskomponenten (z.B. Fernwartungseinheit) oder Hilfsantriebe etc..

Die vom Generator während einer Vorfahrt des Schienenfahrzeugs 2 erzeugte und gegebenenfalls im Energiespeicher 17 zwischengespeicherte elektrische Energie wird mittels des zweiten Stromwandlers 16 in Wechselstrom oder Drehstrom umgewandelt und am Lastanschluss 20 abgegeben.

Mit der Steuerung 19 gekoppelte Sensoren ermitteln den Energieverbrauch des Arbeitsaggregats 9. Die benötigte Energie wird über die Steuerung 19 von der Stromwandlerschaltung 13 zur Verfügung gestellt. Der an den Lastanschluss 20 angeschlossene Elektromotor 21 treibt über das Verteilergetriebe 22 einerseits das Arbeitsaggregat 9 und andererseits die angekoppelte Hydraulikpumpe 23 an. Die Hydraulikpumpe 23 dient zum Betreiben hydraulischer Komponenten des Arbeitsaggregats 9 oder auch sonstiger hydraulischer Werkzeuge, die an Kupplungen einer hydraulischen Druckversorgung angeschlossen werden können.

Günstigerweise ist der Energiewandler 11 sowohl im motorischen als auch im generatorischen Betrieb nutzbar. Bei dieser Variante sind die beiden Stromwandler 14, 16 als bidirektionale Wandler ausgebildet. Dadurch kann der als am Schienenfahrwerk 4 angeordnete Energiewandler 11 sowohl als Fahrantrieb als auch als Generator eingesetzt werden.

## Patentansprüche

1. Fahrzeugverband umfassend ein Traktionsfahrzeug (1) mit Schienenfahrwerken (4) und ein darar gekuppeltes Schienenfahrzeug (2) mit einem über Schienenfahrwerke (4) auf einem Gleis (3) verfahrbaren Maschinenrahmen (5) und mit einem Arbeitsaggregat (9) zur Bearbeitung des Gleises (3), wobei weiters ein Energiewandler (11), der zur Umwandlung von mechanischer Energie in elektrischer Energie mit einem der Schienenfahrwerke (4) gekoppelt ist, und eine Stromwandlerschaltung (13) zur Wandlung der elektrischen Energie, welche an einen Lastanschluss (20) abgebbar ist, angeordnet sind, **dadurch gekennzeichnet, dass** der Energiewandler (11), die Stromwandlerschaltung (13) und der Lastanschluss (20) am Schienenfahrzeug (2) angeordnet sind, dass an dem Lastanschluss (20) ein Elektromotor (21) angeschlossen ist, dass der Elektromotor (21) zum Betreiben eines Verteilergetriebes (22) ausgebildet ist, dass das Verteilergetriebe (22) zumindest mit dem einen Arbeitsaggregat (9) zur Bearbeitung des Gleises (4) gekoppelt ist, dass die Stromwandlerschaltung (13) einen ersten Stromwandler (14) umfasst, der über einen Gleichstrom-Zwischenkreis (15) mit einem zweiten Stromwandler (16) gekoppelt ist, dass im Gleichstrom-Zwischenkreis (15) ein Energiespeicher (17) zum Speichern von elektrischer Energie vorgesehen ist, dass die Stromwandler (14, 16) als bidirektionale Wandler ausgebildet sind und dass der Energiewandler (11) sowohl motorisch als auch generatorisch betreibbar ist.

2. Fahrzeugverband nach Anspruch 1, **dadurch gekennzeichnet, dass** mehrere Energieverbraucher (18, 19) an den Gleichstrom-Zwischenkreis (15) angeschlossen sind.

3. Fahrzeugverband nach Anspruch 1 oder 2, **dadurch gekennzeichnet, dass** das Arbeitsaggregat (9) und die Stromwandlerschaltung (13) mittels einer gemeinsamen Steuerung (19) angesteuert sind.

4. Fahrzeugverband nach einem der Ansprüche 1 bis 3, **dadurch gekennzeichnet, dass** dem Verteilergetriebe (22) eine Hydraulikpumpe (23) für eine hydraulische Druckversorgung zugeordnet ist.

5. Fahrzeugverband nach einem der Ansprüche 1 bis 4, **dadurch gekennzeichnet, dass** das Arbeitsaggregat (9) als Schleifaggregat zum Schleifen des befahrenen Gleises (3) ausgebildet ist.

6. Verfahren zum Betreiben eines Fahrzeugverbandes nach einem der Ansprüche 1 bis 5, wobei das Schienenfahrzeug (2) von dem Traktionsfahrzeug (1) gezogen wird, wobei mittels des Energiewandlers (11) mechanische Energie in elektrische Energie umgewandelt und am Lastanschluss (20) bereitgestellt wird und wobei mittels der bereitgestellten elektrischen Energie ein Elektromotor (21) versorgt wird, **dadurch gekennzeichnet, dass** der Elektromotor (21) ein Verteilergetriebe (22) antreibt, mit dem zumindest ein Arbeitsaggregat (9) zur Bearbeitung des Gleises (3) gekoppelt ist und dass der Energiewandler (11) wahlweise als Fahrantrieb genutzt wird.

7. Verfahren nach Anspruch 6, **dadurch gekennzeichnet, dass** eine Hydraulikpumpe (23) über das Verteilergetriebe (22) angetrieben wird, um hydraulische Komponenten des Arbeitsaggregats (9) zu versorgen.

## Claims

1. A vehicle formation comprising a traction vehicle (1) with on-track undercarriages (4) and a rail vehicle (2) coupled thereto having a machine frame (5) mobile via on-track undercarriages (4) on a track (3) and a work unit (9) for treatment of the track (3), including an energy converter (11) which, for converting mechanical energy into electrical energy, is coupled to one of the on-track undercarriages (4), and including a current converter circuit (13) for conversion of the electrical energy which can be delivered to a load connection (20), **characterized in that** the energy converter (11), the current converter circuit (13), and the load connection (20) are arranged at the rail vehicle (2) that an electric motor (21) is connected to the load connection (20), that the electric motor (21) is designed for operating a distribution gear (22), and that the distribution gear (22) is coupled to at least one work unit (9) for treatment of the track (3), that the current converter circuit (13) comprises a first current converter (14) which is coupled via a DC intermediate circuit (15) to a second current converter (16), that an energy store (17) for storing electrical energy is provided in the DC intermediate circuit (15), that the current converters (14, 16) are designed as bidirectional transformers, and that the energy converter (11) can be motor-operated as well as generator-operated.

2. A vehicle formation according to claim 1, **characterized in that** several energy users (18, 19) are connected to the DC intermediate circuit (15).

3. A vehicle formation according to one of claims 1 or 2, **characterized in that** the work unit (9) and the current converter circuit (13) are controlled by means of a common control (19).

4. A vehicle formation according to one of claims 1 to 3, **characterized in that** a hydraulic pump (23) for hydraulic pressure supply is associated with the distribution gear (22).

5. A vehicle formation according to one of claims 1 to 4, **characterized in that** the work unit (9) is designed as a grinding unit for grinding the track (3) on which it travels.

6. A method for operation of a vehicle formation according to one of claims 1 to 5, wherein the rail vehicle (2) is being pulled by traction vehicle (1), wherein mechanical energy is converted to electrical energy by means of the energy converter (11) and provided at the load connection (20), and wherein an electric motor (21) is supplied by means of the provided electrical energy, **characterized in that** the electric motor (21) drives a distributor gear (22) with which at least one work unit (9) for treating the track (3) is coupled and that the energy converter (11) is used optionally as a motive drive.

7. A method according to claim 6, **characterized in that** a hydraulic pump (23) is driven via the distributor gear (22) in order to supply hydraulic components of the work unit (9).

## Revendications

1. Association de véhicules comprenant un véhicule à traction (1) avec des mécanismes de roulement ferroviaires (4) et un véhicule ferroviaire (2) attelé à celui-ci avec un châssis de machine (5) pouvant être déplacé sur une voie ferrée (3) par le biais de mécanismes de roulement ferroviaires (4) et avec un module de travail (9) pour l'usinage de la voie ferrée (3), dans laquelle un transformateur d'énergie (11) qui est couplé à un des mécanismes de roulement ferroviaires (4) pour la transformation d'énergie mécanique en énergie électrique et un circuit de transformateur de courant (13) pour la transformation de l'énergie électrique qui peut être délivrée à un raccord de charge (20) sont en outre disposés, **caractérisée en ce que** le transformateur d'énergie (11), le circuit de transformateur de courant (13) et le raccord de charge (20) sont disposés sur le véhicule ferroviaire (2), qu'un moteur électrique (21) est raccordé au raccord de charge (20), que le moteur électrique (21) est réalisé pour l'exploitation d'une boîte de transfert (22), que la boîte de transfert (22) est couplée au moins à un des modules de travail (9) pour l'usinage de la voie ferrée (4), que le circuit de transformateur de courant (13) comprend un premier transformateur de courant (14) qui est couplé à un second transformateur de courant (16) par le biais d'un circuit intermédiaire à courant continu (15), qu'un accumulateur d'énergie (17) pour le stockage d'énergie électrique est prévu dans le circuit intermédiaire à courant continu (15), que les transformateurs de courant (14, 16) sont réalisés en tant que transformateurs bidirectionnels et que le transformateur d'énergie (11) peut être exploité aussi bien de manière motrice que de manière génératrice.

2. Association de véhicules selon la revendication 1, **caractérisée en ce que** plusieurs consommateurs d'énergie (18, 19) sont raccordés au circuit intermédiaire à courant continu (15).

3. Association de véhicules selon la revendication 1 ou 2, **caractérisée en ce que** le module de travail (9) et le circuit de transformateur de courant (13) sont commandés au moyen d'une commande commune (19).

4. Association de véhicules selon une des revendications 1 à 3, **caractérisée en ce qu'**une pompe hydraulique (23) pour une alimentation en pression hydraulique est associée à la boîte de transfert (22).

5. Association de véhicules selon une des revendications 1 à 4, **caractérisée en ce que** le module de travail (9) est réalisé en tant que module de rabotage pour le rabotage de la voie ferrée parcourue (3).

6. Procédé d'exploitation d'une association de véhicules selon une des revendications 1 à 5, dans lequel le véhicule ferroviaire (2) est tiré par le véhicule à traction (1), dans lequel de l'énergie mécanique est transformée en énergie électrique au moyen du transformateur d'énergie (11) et mise à disposition sur le raccord de charge (20), et dans lequel un moteur électrique (21) est alimenté au moyen de l'énergie électrique mise à disposition, **caractérisé en ce que** le moteur électrique (21) entraîne une boîte de transfert (22) à laquelle au moins un module de travail (9) est couplé pour l'usinage de la voie ferrée (3) et que le transformateur d'énergie (11) est utilisé sélectivement en tant que système d'entraînement.

7. Procédé selon la revendication 6, **caractérisé en ce qu'**une pompe hydraulique (23) est entraînée par le biais de la boîte de transfert (22) pour alimenter des composants hydrauliques du module de travail (9).
